# EUROPEAN PATENT SPECIFICATION

(11) **EP 3 124 324 B1**
(45) Date of publication and mention of the grant of the patent: **24.07.2019**
(21) Application number: 15768694.0
(22) Date of filing: 05.03.2015
(51) Int. Cl.: B60P 3/36, B62D 33/06

(54) **VAN TRUCK**
LASTKRAFTWAGEN
CAMION FOURGON

(30) Priority: 28.03.2014 CN 201410123467
(43) Date of publication of application: 01.02.2017
(73) Proprietor: Zhejiang Geely Holding Group Co., Ltd., Zhejiang 310051 (CN); Zhejiang Geely Automobile Research Institute Co., Ltd., Taizhou, Zhejiang 317000 (CN)
(72) Inventor: LI, Shufu, Hangzhou Zhejiang 310051 (CN)
(74) Representative: 2K Patentanwälte Blasberg Kewitz & Reichel
(86) International application number: PCT/CN2015/073713
(87) International publication number: WO 2015/143978

(56) References cited:
- EP-A1- 0 033 648
- EP-A1- 0 033 648
- EP-A2- 0 210 370
- CN-A- 102 180 120
- CN-A- 103 879 465
- DE-A1- 3 619 958
- DE-A1- 3 619 958
- DE-A1- 3 800 472
- GB-A- 2 094 237
- GB-A- 2 094 237
- JP-U- S59 151 786

## Description

### Field of the Invention

The present invention relates to the field of automobiles, and in particular, to a truck.

### Background of the Invention

At present, with the improvement of living standards of people, various motor caravans or motor homes suitable for long or short distance travels have emerged. Such motor caravans are provided with various living facilities, and although having various sizes, they generally include space for rest, kitchens, bathrooms and other functions. Thus, greatly improved is the living quality in the wild or where the corresponding living conditions is absent.

However, this type of vehicles is basically designed and equipped with corresponding facilities based on a rear passenger compartment, and a front driver cab is merely used as a space for driving. In addition, the existing motor caravans are generally designed to be used when parking. In particular, for the vehicles the space for rest of which is designed and arranged at a movably lifting roof, the rest space is designed with functions similar to those of tents and cannot be used during vehicle moving.

With regard to a truck for long-distance transport, the driver cab and the cargo body are independent or separated from each other. Two drivers generally sit in the driver cab, and meanwhile, a space for one person lying is arranged behind the seats. When considering improvement of the transport speed and economic aspects, the type of trucks often travels day and night and is alternately driven by the two drivers. Due to such a driver cab structure, the space for rest is narrow, the diet and sanitation problems of the drivers cannot be solved, and thus frequent parking is required, which wastes time. Moreover, due to electric power limitation, this type of trucks scarcely has corresponding electric appliances, thereby failing to provide entertainment information or improve the living standard for the driver at rest.

DE 36 19 958 A1 discloses a truck comprising a driver cab for commercial vehicles with a sleeper berth according to the preamble of claim 1. Providing one or more stoppers extending in a longitudinal direction of the truck and arranged on a left side and/or right side of the lie flat area is not disclosed.

JP S59 151786 U discloses a truck comprising a driver cab and having a loading platform. Providing one or more stoppers extending in a longitudinal direction of the truck and arranged on a left side and/or right side of the lie flat area is not disclosed.

EP 0 210 370 A2 discloses a discloses a truck comprising a driver cab and having sleeping facility in a driver's cab. Providing one or more stoppers extending in a longitudinal direction of the truck and arranged on a left side and/or right side of the lie flat area is not disclosed.

### Summary of the Invention

It is an object of the present invention to provide a truck comprising a driver cab for accommodating passengers and a cargo body, enabling a satisfactory rest environment for the passengers in a moving state of a truck and enabling comfortable living conditions for the truck passengers onboard.

This problem is solved by a truck as claimed by claim 1. Further advantageous embodiments are the subject-matter of the dependent claims.

According to the present invention there is provided a truck, coprising a driver cab for accommodating passengers and a cargo body for loading cargos, which are separated from each other, wherein the driver cab comprises: a supporting plate, arranged at the top of the driver cab to serve as a top wall of the driver cab; and a movable top cover, which is provided with a front edge and a rear edge, is arranged over the supporting plate, and can move between a retracted position and an expanded position; wherein, in the retracted position, the front edge and the rear edge of the movable top cover are close to the supporting plate; in the expanded position, the front edge of the movable top cover is adjacent to the supporting plate, and the rear edge is away from the supporting plate, so that a windward side of the movable top cover is formed into a slope surface with a lower front part and a higher rear part along a forward direction of the truck, and a rest space for a the passenger to lie flat is formed between the movable top cover and the supporting plate.

According to the present invention the driver cab further comprises one or more stoppers arranged at the upper surface of the supporting plate around a preset lie-flat area in the rest space, wherein at least one of the one or more stoppers extends along a lateral direction of the truck and is arranged on a left side and/or a right side of the lie-flat area, wherein the at least one stopper is preferably provided on its surface facing to the lie-flat area with a buffer layer made of an elastic material
Further, in the expanded position, the front edge of the movable top cover abuts against the supporting plate.

According to a further embodiment, the windward side of the movable top cover is formed into a streamlined arc structure.

According to a further embodiment, the truck further comprises an actuating mechanism, used for driving the movable cover plate to move between the retracted position and the expanded position.

According to a further embodiment, the interior of the driver cab is divided into a seating area for the passengers including a driver to seat and a living area for arrangement of living facilities; the living area is located behind the seating area; the driver cab further includes at least one row of seats arranged in the seating area, and the at least one row of seats includes a driver seat for the driver; and preferably, a single row of seats is arranged in the seating area.

According to a further embodiment, the driver cab further comprises a divider plate, which is arranged between the seating area and the living area and is used for separating the seating area and the living area of the driver cab into two substantially independent spaces.

According to a further embodiment, the divider plate is provided with a divider plate opening for enabling the passenger to pass through between the seating area and the living area.

According to a further embodiment, the truck further includes a water storage tank for providing domestic water and/or a waste water tank for storing used waste water, which is arranged at the outside of the driver cab.

According to a further embodiment, the driver cab is provided with a plurality of vehicle doors on side walls thereof, the plurality of vehicle doors include at least one seating door for accessing the seating area, and a single living door for accessing the living area.

According to a further embodiment, the driver cab further includes a movable frame arranged on an inner surface of the living door, and the movable frame is connected to the living door in such a manner that the movable frame can move between a state of being vertical to the living door and a state of being parallel to the living door.

According to a further embodiment, the living facilities arranged in the living area at least include a toilet, a stove and a water sink; and optionally, the living facilities further include a refrigerator and a microwave oven, and the stove is an electromagnetic oven.

According to a further embodiment, the driver cab further includes an enclosure, which is arranged between the movable top cover and the supporting plate and is used for enclosing the rest space along the periphery of the rest space; and optionally, the enclosure is foldable or is made of a flexible material.

According to a further embodiment, an enclosure opening enabling the passenger to access the rest space is formed in the enclosure.

According to a further embodiment, the enclosure opening is formed in a side of the enclosure facing the cargo body; and moreover, a ladder for the passenger to approach the enclosure opening is arranged on an outer surface of a back wall of the driver cab.

According to a further embodiment, the supporting plate is provided with a supporting plate opening for the passenger to access the rest space from the interior of the driver cab.

According to a further embodiment, the stoppers can move between a non-stop position that is substantially lay flat to be close to the upper surface and a stop position that is substantially vertical to the upper surface.

According to a further embodiment, the movable top cover includes: a first piece, wherein when the movable top cover is in the expanded position, the first piece extends along the forward direction of the truck according to a such a manner that the front part is lower and the rear part is higher; and a second piece pivotably connected to the first piece, wherein when the movable top cover is in the expanded position, the second piece substantially extends horizontally.

According to a further embodiment, when the movable top cover is in the expanded position, the distance from the position of the highest point of the movable top cover to the supporting plate is not greater than 80cm.

According to a further embodiment, the truck is a serial hybrid vehicle, and further includes a power system, the power system comprising: a fuel source; a control system; at least two auxiliary power units, wherein each auxiliary power unit independently receives fuel from the fuel source under the control of the control system, converts the chemical energy in the fuel into electric energy and outputs the electric energy to a common current bus; a power battery, which is electrically connected to the common current bus to receive the electric energy from the common current bus under the control of the control system for charging or discharging through the common current bus; and a traction motor, which is electrically connected to the common current bus to receive the electric energy from the common current bus under the control of the control system, convert the electric energy into mechanical energy and transmit the mechanical energy to a power train of the truck so as to drive the truck to run.

According to the truck of the present invention, the movable cover plate is arranged on the roof of the driver cab, the resulted travelling wind resistance is reduced by the extension direction of the particularly arranged movable cover plate, so when the sufficient rest space is provided, the normal use of the rest space can be guaranteed in the moving state of the truck, thereby generating no influence on the driving and providing convenience for the sufficient rest of the driver.

Further, the living area is arranged in the driver cab of the present invention, the living facilities installed in the living area can provide diet and sanitation services for the drivers in the travelling of the truck, thereby reducing the parking times of the truck, and meanwhile improving the living quality of the drivers.

Further, the truck of the present invention may adopt the form of the serial hybrid vehicle and the special power system that has been invented by the applicant. This can provide sufficient driving power for the truck, as well as providing sufficient electricity for the living area, so that various living facilities, especially various electric appliances on the truck can also normally work in the travelling of the truck.

The truck of the present invention can meet the long-time continuous travelling demand of the truck, and can also meet the spiritual life needs of the drivers and improve the living quality of the drivers in the travelling f the truck.

According to the following detailed description of specific embodiments of the present invention in combination with drawings, those skilled in the art will better understand the aforementioned and other objects, advantages and features of the present invention.

### Brief Description of the Drawings

Some specific embodiments of the present invention will be described below in an exemplary mode rather than a non-limited mode with reference to drawings. Identical reference signs in the drawings indicate identical or similar components or parts. Those skilled in the art should understand that these drawings are not necessarily drawn to scale. In the drawings:
Fig. 1 is a schematic side view of a truck according to one embodiment of the present invention;
Fig. 2 is a schematic internal top view of an inner space of a driver cab according to one embodiment of the present invention;
Fig. 3 is a schematic top view of arrangement of a rest space of a driver cab according to one embodiment of the present invention;
Fig. 4 is a schematic diagram of working states of a stopper as shown in Fig.3;
Fig. 5 is a schematic top view of arrangement of a rest space of a driver cab according to another embodiment of the present invention;
Fig. 6 is a schematic diagram of structure of a movable cover plate according to another embodiment of the present invention.

### Detailed Description of the Embodiments

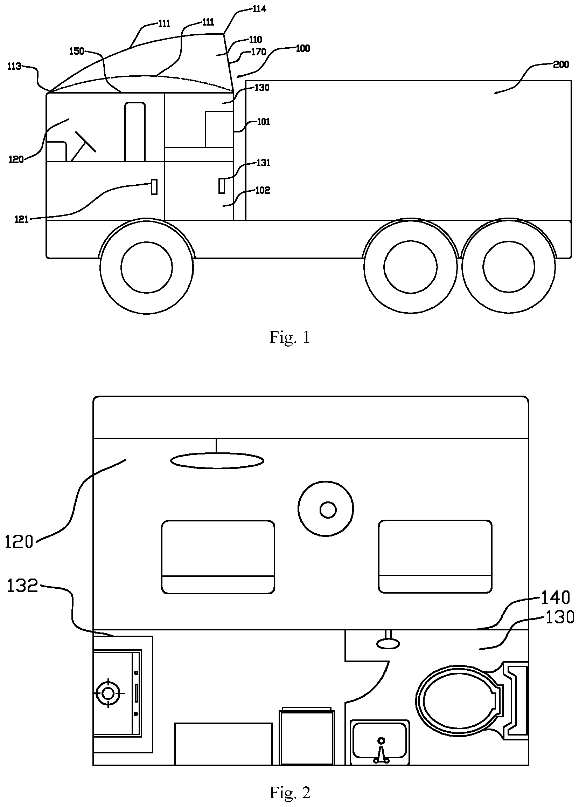

Fig. 1 is a schematic side view of a truck according to one embodiment of the present invention. The truck may generally include a driver cab 100 for accommodating passengers and a cargo body 200 for loading cargos, which are separated from each other. A supporting plate 150 serving as a top wall of the driver cab 100 may be arranged at the top of the driver cab 100. The supporting plate 150 may be used as a sealed roof of the driver cab 100, and it can be known below that the supporting plate may also be used as a bearing surface for the passenger to rest. A movable top cover 111 may be arranged above the supporting plate 150. The movable top cover 111 may have a front edge 113 and a rear edge 114 respectively at two opposite ends thereof, and can move between a retracted position and an expanded position. When the movable top cover 111 is in the retracted position, the front edge 113 and the rear edge 114 of the movable top cover 111 are close to the supporting plate 150. When the movable top cover 111 is in the expanded position, the front edge 113 of the movable top cover 111 is close to the supporting plate 150, and the rear edge 114 is away from the supporting plate 150, so that a windward side of the movable top cover 111 is formed into a slope surface with a lower front and a higher rear along a forward direction of the truck.

In the embodiment as shown in Fig. 1, the movable top cover 111 drawn in a solid line is located in an exemplary expanded position, and the movable top cover 111 drawn in dotted line is located in an exemplary retracted position. It can be seen from Fig. 1 that, when in the retracted position, the movable top cover 111 as a whole may be close to the supporting plate 150 in a horizontal arrangement mode. In this case, it can be understood that the movable top cover 111 together with the supporting plate 150 constitutes the roof of the driver cab 100 of the truck. Compared with the conventional truck driver cab without the movable top cover 111, the movable top cover 111 in the retracted position will not significantly increase the windward area and the caused travelling resistance of the truck. When the movable top cover 111 is moved from the retracted position to the expanded position as shown in Fig. 1, the rear edge 114 may be raised towards a direction away from the supporting plate 150 with the front edge 113 being as a rotation axis, and thus the movable top cover 111 may form the necessary slope surface with the lower front and the higher rear. The extension mode with the lower front and the higher rear of the slope surface may maximally reduce the travelling resistance of the truck when the movable top cover 111 is in the expanded position. The expanded movable top cover 111 together with the supporting plate 150 forms an approximately triangular three-dimensional space as a rest space 110. Another passenger excluding the driver, for example, a second driver in a moving state of the truck, or any passenger in a parking state may enter the rest space 110 for rest. In the present invention, the movable cover plate 111 is arranged directly on the roof of the driver cab without depending on and influencing the cargo body 200, and the passenger may rest in the moving state of the truck.

In the embodiment as shown in Fig. 1, the movable top cover 111 as a whole may adopt a streamlined arc structure. In this way, no matter the movable top cover 111 is in the expanded position or the retracted position, the wind resistance of the truck may be further effectively reduced. It is especially advantageous for the truck to travel, particularly in high speed, when the movable top cover 111 is in the expanded position. It can be understood that, in other embodiments, only a part of the movable top cover 111, which is corresponding to the windward side of the movable top cover 111 in the expanded position, is in the streamlined arc structure.

When the movable cover plate 111 is in the expanded position, it is preferable that the distance from the position of the highest point (the rear edge 114 in Fig. 1) of the movable cover plate 111 to the supporting plate 150 is not greater than 80cm. In this way, when the movable cover plate 111 is in the expanded position, the overall height may be a reduced height that is only suitable for the normal rest of the passenger in the rest space 110. This greatly reduces the increased resistance of the windward side due to the existence of the movable cover plate 111, thereby it is more suitable for the truck of the present invention to still maintain normal travelling, particularly high speed travelling, when the movable cover plate 111 is in the expanded position. Although not shown in Fig. 1, it can be understood that, the movement of the movable cover plate 111 between the expanded position and the retracted position may be driven by an actuating mechanism 160. The power of the actuating mechanism 160 may be pneumatic or hydraulic or electric drive or the like. Those skilled in the art may select any appropriate existing actuating mechanism 160 to drive the movable cover plate 111. The front edge 113 of the movable cover plate 111 may be movably connected to the supporting plate 150 by a structure such as a pin shaft, to allow the movable cover plate 111 to pivot around the front edge 113. The movable cover plate 111 may also be not directly connected with the supporting plate 150, but the actuating mechanism 160 supports the movable cover plate 111 as a whole. In this case, when the movable cover plate 111 moves between the expanded position and the retracted position, the front edge 113 thereof may also appropriately move along the supporting plate 150.

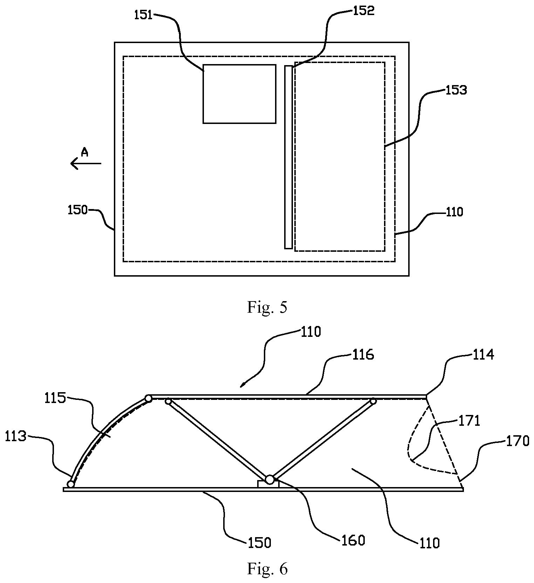

Fig. 6 shows a structure of the movable cover plate 111 in one embodiment of the present invention, and here, the movable cover plate 111 is in the expanded position.

As shown in Fig. 6, the movable cover plate 111 may employ a structure in which two or more pieces are interconnected and may pivot relative to each other. In Fig. 6, the movable top cover 111 is arranged as a structure in which two pieces are interconnected, and the two pieces are respectively a first piece 115 and a second piece 116 that may pivot relative to each other. The first piece 115 has a front side edge serving as the front edge 113 of the entire movable cover plate and an opposite rear side edge connected to the second piece 116. In the expanded position as shown in Fig. 6, the first piece 115 is incline relative to the supporting plate 150 to form the slope surface with the lower front and the high rear. The length of the first piece and the inclination angle relative to the supporting plate 150 substantially define a height of the rest space 110 between the movable top cover 111 and the supporting plate 150, which is the lower height to meet the requirement for the normal rest of the passenger. The second piece 116 may substantially extend horizontally, the front side edge thereof is pivotable relative to the rear side edge of the first piece 115, and the rear side edge thereof is used as the rear edge 114 of the entire movable top cover.

Fig. 6 further shows an exemplary actuating mechanism 160. Exemplarily, the actuating mechanism 160 may be provided with two actuating levers for actuating and supporting the movable cover plate 111. When the two-piece type movable cover plate 111 moves into the expanded position under the drive of the actuating mechanism 160, the front edge 113 of the first piece 115 may abut against the supporting plate 150, and the rear side edge of the first piece 115 and the entire second piece 116 are lift up to maintain the rest space 110 with a defined height. As mentioned in the description of the movable cover plate in Fig. 1, in order that the truck is more suitable for being capable to maintain travelling, particularly a high speed travelling of the truck, when the movable cover plate 111 is in the expanded position, it is preferable that the distance between the second piece 116 and the supporting plate 150 is not greater than 80cm, thereby limiting the overall height of the movable cover plate 111 in the expanded position. In other embodiments, when the movable cover plate 111 is composed of more than two pieces, the shape thereof in the expanded position may be substantially the same as that of the two-piece structure as shown in Fig. 6, and the object of all of them is to reduce the wind resistance of the movable cover plate 111 by reducing the height of the movable cover plate 111 in the expanded position.

Although not shown, it may be understood that when the actuating mechanism 160 drives the movable cover plate 111 to move from the expanded position to the retracted position, the rear side edge of the first piece 115 and the entire second piece 116 of the movable cover plate 111 may be lowered towards the supporting plate 150 and are flatly spread on the supporting plate 150 as a whole. It also may be understood that, for the movable cover plate 111 as shown in Fig. 6, when the movable cover plate is in the expanded position, the first piece 115 is substantially used as the windward side during the travelling of the truck. In another embodiment, to further reduce the travelling wind resistance, similar to the movable cover plate 111 as shown in Fig. 1, the first piece 115 may also be formed into the streamlined arc structure.

As shown in Fig. 1 and Fig. 6, an enclosure 170 is arranged at the periphery of the rest space 110 formed between the supporting plate 150 and the movable cover plate 111.

The enclosure 170 may substantially completely seal the gap between the supporting plate 150 and the movable cover plate 111 in the expanded position. When the movable cover plate 111 is in the retracted position, the enclosure 170 may be retracted into between the movable cover plate 111 and the supporting plate 150. For the clarity of illustration, only a part of the enclosure 170 located between the rear edge 114 of the movable top cover 111 and the supporting plate 150 is shown in Fig. 1 and Fig. 6. It may be understood that, the enclosure 170 is also arranged between two side edges of the movable top cover 111 along the lateral direction of the truck and the supporting plate 150. For example, the enclosure 170 may be made of a flexible material, for example, nylon cloth, canvas, plastic cloth or cloth with rubber surfaces and other conventional materials in the prior art, which has certain strength and windshield performance. The enclosure 170 may have a structure of multiple layers made of different materials. The enclosure 170 may also be formed into a foldable form. In order to improve ventilation and breathability of the rest space 110, a ventilation opening (not shown) which can be opened and closed may be provided in the enclosure 170 and/or the movable cover plate 111. In another embodiment of the present invention, a transparent window (not shown) may also be provided in the enclosure 170 and/or the movable cover plate 111 to improve the illumination of the rest space 110.

As shown in Fig. 6, in one embodiment of the present invention, an enclosure opening 171 enabling the passenger to access the rest space 110 is formed in the enclosure 170. For example, the opening and closing of the enclosure opening 171 may be achieved by a zipper. In Fig. 6, the enclosure opening 171 is formed in a side of the enclosure 170 facing the cargo body 200, in this way, a ladder (not shown) for the passenger to approach the enclosure opening 171 may be correspondingly arranged on an outer surface of a back wall 101 (referring to Fig. 1) of the driver cab 100. In this way, the passenger may enter the rest space 110 from the enclosure opening 171 from the outside of the driver cab 100 via the ladder. It will be seen below that the passenger may enter the rest space from the interior of the driver cab 100 through an opening formed in the supporting plate 150, and in this case, the enclosure opening 171 formed in the enclosure 170 may be omitted.

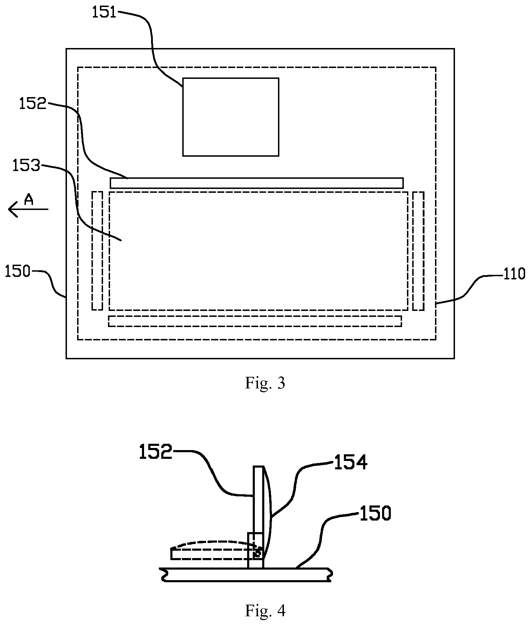

Fig. 3 shows a top view of the rest space 110, wherein for the clarity of illustration, the movable top cover 111 is not drawn, and a direction indicated by an arrow A is the forward direction of the truck. As shown in Fig. 3, one or more stoppers 152 may be installed on the upper surface of the supporting plate 150. These stoppers 152 may be arranged around a preset lie-flat area 153 of the passenger in the rest space 110. The long side of the lie-flat area 153 in Fig. 3 corresponds to the forward direction of the truck. When the stopper 152 is not in use, it may be parallel to or lay flat to the upper surface of the supporting plate 150, namely is in a non-stop position. This is beneficial to avoid the movable top cover 111 being prevented from abutting against the supporting plate 150, when the movable top cover 111 moves from the expanded position to the retracted position. When the movable top cover 111 is in the expanded position and the passenger enters the rest space 110 and lies down, the stopper 152 may be moved and kept to be substantially vertical to the upper surface of the supporting plate 150, namely is in a stop position. The stopper 152 in the vertical state may limit the body of the passenger in rest within the desired lie-flat area 153, to prevent injury to the passenger due to movement caused by sudden brake or turning and other violent actions of the travelling truck. The stopper 152 is also helpful for the passenger to lean on when in rest. Fig. 4 shows a stopper 152 in one embodiment of the present invention, the stopper 152 may be fixed onto the supporting plate 150, and can move between a vertical state drawn in a solid line and a parallel state drawn in a dotted line. The stopper 152 may be provided with a buffer layer 154 of an elastic material on a surface facing to the lie-flat area 153. The stopper 152 in the present invention may be arranged at one side of the lie-flat area 153, and may also be simultaneously arranged at each of four sides of the lie-flat area 153 (the stoppers shown by the dotted lines in Fig. 3) to protect the safety of the passenger in the lie-flat area 153. Fig. 3 also shows a supporting plate opening 151 formed in the supporting plate 150, in this way, the passenger may enter the rest space 110 from the interior of the driver cab 100 even when the truck is travelling. It may be understood that a movable door (not shown) for opening and closing the supporting plate opening may be provided for the supporting plate opening 151.

Fig. 5 shows a top view of the rest space 110 in another embodiment. As shown in Fig. 5, the long side direction of the lie-flat area 153 may be set to be vertical to the forward direction of the truck. At this time, a stopper 152 extending along the lateral direction of the truck may be arranged at a side of the lie-flat area 153 towards to the forward direction of the truck. The safety at another opposite side of the lie-flat area 153 may be provided by the enclosure 170. Certainly, more stoppers 152 may also be arranged at the periphery of the lie-flat area 153.

Besides the stoppers 152, in a further embodiment of the present invention, safety belts (not shown) may be installed between the movable cover plate 111 and the supporting plate 150. The safety belts may be made of a material which is flexible but has necessary protection strength, and both ends thereof may be fixedly connected with the movable cover plate 111 and the supporting plate 150 respectively. The safety belts may be arranged at intervals. Such safety belts may enhance the safety protection of the periphery of the rest space 110 when the movable cover plate 111 is in the expanded position. A three-point safety belt similar to that generally arranged in a vehicle driver cab may further be arranged in the lie-flat area 153 of the rest space 110. In a further embodiment of the present invention, a corresponding elastic buffer layer may be arranged on the inner surface of the movable cover plate 111.

Returning to Fig. 1 and referring to Fig. 2, in one embodiment of the present invention, the interior of the driver cab 100 may be divided into a seating area 120 for the seating of the passenger and a living area 130 for the arrangement of living facilities. The seating area 120 and the living area 130 may be a front area and a rear area arranged along a longitudinal direction of the truck. A row of seats may be arranged in the seating area 120, for example, the row of seats may include a driver seat and a second driver seat (a passenger seat beside the driver seat). Certainly, in other embodiments, another row of passenger seats may be added according to the size of the driver cab 100. The living area 130 may be located behind the seating area 120, and may provide corresponding living facilities for the daily life of the driver, for example, kitchen and toilet facilities.

As shown in Fig. 2, in one embodiment of the present invention, to avoid mutual influence of the seating area 120 and the living area 130, a divider plate 140 may be arranged between the seating area 120 and the living area 130 for separating the seating area 120 and the living area 130 into two substantially independent spaces. The divider plate 140 may be made of any of a plastic board, a wooden board or a metal board. Apart, for example, the upper part, of the divider plate 140 may be made of a transparent or semitransparent material. In a further embodiment of the present invention, a corresponding divider plate opening (not shown) may be formed in the divider plate 140 to realize a passage between the seating area 120 and the living area 130, so as to allow the passenger to pass through between the seating area 120 and the living area 130 right in the driver cab 100. It may be understood that, a movable door, for example, a sliding door, may also be provided for the divider plate opening.

As shown in Fig. 1, in one embodiment of the present invention, the driver cab 100 is provided with a plurality of vehicle doors on side walls 102, these vehicle doors include a living door 131 enabling the passenger to enter the living area 130 directly from the outside of the vehicle and seating doors 121 enabling the driver and other passengers to enter the seating area 120 directly from the outside of the vehicle. The living door 131 may be one, and two seating doors 121 are respectively arranged at two opposite sides corresponding to the driver seat and the second driver seat of the driver cab 100.

In the present invention, the living area 130 is mainly used for realizing functions similar to those of a motor home. However, it may be understood that, since the space of the driver cab 110 of the truck is much smaller than that of the conventional motor home, the arrangement of the living facilities in the living area 130 needs to be relatively compact. As shown in Fig. 2, a toilet, a stove and a water sink may be arranged in the living area 130, the stove may be either a gas stove or an electromagnetic oven. In addition, if there is allowable space in the living area 130, other living facilities may also be arranged, for example, a refrigerator, a microwave oven, a flat television, etc.

As shown in Fig. 2, in one embodiment of the present invention, a movable frame 132 may be arranged on an inner surface of the living door 131. The movable frame 132 may be in two states, one state is a working state in which the movable frame 132 is vertical to the living door 131, namely the state as shown in Fig. 2. In the working state, corresponding living facilities such as the electromagnetic oven or the like may be placed or fixed on the movable frame 132. At this moment, it is improper or unable to open the living door 131. The another state of the movable frame 132 is an idle state of being parallel to the living door 131, at this moment, the living door 131 may be opened, and a person is allowed to come in and get out. As mentioned above, due to the limited space of the driver cab 100 of the truck, the space in the living area 130 needs to be fully utilized. In this way, when the movable frame 132 is in the idle state, the available space of the living area 130 may be increased, and no living facility is placed on the movable frame 132, so the opening or closing of the living door 131 is not interfered. When the movable frame 132 is in the working state, the movable frame may provide a placement surface for the living facilities to fully utilize the space of the living area 130. Certainly, when a thin flat living facility is fixedly installed on the movable frame 132, the living facility may move with the movable frame, and when the movable frame 132 is in the idle state, the living door 131 is still allowed to be opened, so that the person may enter and exit from the living door 131.

In one embodiment of the present invention, a water storage tank for providing domestic water for the living area 130 may be installed at the outside of the driver cab 100, and a waste water tank for storing used waste water may also be installed. The water storage tank and the waste water tank may be connected to the water sink and the toilet in the living area 130 by corresponding water supply and drainage pipes. The water storage tank may be installed at the upper part of the outer surface of the back wall 101 of the driver cab 100, and the waste water tank may be installed near the chassis of the truck.

The Chinese Patent Application No. 201310467918.2 of the applicant provides a power system for a serial hybrid vehicle. The power system includes:
a fuel source;
a control system;
at least two auxiliary power units, wherein each auxiliary power unit independently receives fuel from the fuel source under the control of the control system, converts the chemical energy in the fuel into electric energy and outputs the electric energy to a common current bus;
a power battery, which is electrically connected to the common current bus to, under the control of the control system, receive the electric energy from the common current bus for charging or discharging through the common current bus; and
a traction motor, which is electrically connected to the common current bus to, under the control of the control system, receive the electric energy from the common current bus, convert the electric energy into mechanical energy and transmit the mechanical energy to a power train of the truck to drive the truck to run.

The power system is suitable for allowing the use of alternative fuels with lower energy density instead of traditional gasoline or diesel, and is suitable for allowing an engine in the auxiliary power unit to work in a working condition area in which oil consumption and emission are low, so as to effectively reduce the emission, improve the economic efficiency of the fuel and compensate the problem of relatively low energy conversion efficiency of the power system of the serial hybrid vehicle. Moreover, the power system may be flexibly provided with a proper number of engines for combined use as desired.

In one embodiment of the present application, a truck is provided, and the truck may be a serial hybrid truck. The truck may include the power system in the Chinese Patent Application No. 201310467918.2 and has the driver cab 100 as described above. Since the truck according to the present invention provides functions similar to those of the motor home, sufficient power supply should be provided for the truck. The power system in the Chinese Patent Application No. 201310467918.2 may meet this demand of the truck of the present invention, and an enough number of engines are combined for use to provide sufficient electricity while proving sufficient travelling power for the truck.

## Claims

1. A truck, comprising a driver cab (100) for accommodating passengers and a cargo body (200) for loading cargos, which are separated from each other, wherein the driver cab (100) comprises:
a supporting plate (150), arranged at the top of the driver cab (100) to serve as a top wall of the driver cab (100); and
a movable top cover (111) having a front edge (113) and a rear edge (114), arranged over the supporting plate (150) and being movable between a retracted position and an expanded position; wherein
, in the retracted position, the front edge (113) and the rear edge (114) of the movable top cover (111) are adjacent to the supporting plate (150);
, in the expanded position, the front edge (113) of the movable top cover (111) is adjacent to the supporting plate (150), and the rear edge (114) is away from the supporting plate (150), so that a windward side of the movable top cover (111) is formed into a slope surface with a low front and a high rear along a forward direction of the truck, and
a rest space (110) for a passenger to lie flat is formed between the movable top cover (111) and the supporting plate (150),
**characterized in that** the driver cab (100) further comprises one or more stoppers (152) arranged at the upper surface of the supporting plate (150) around a preset lie-flat area (153) in the rest space (110), wherein at least one of the one or more stoppers (152) extends along a lateral direction of the truck and is arranged on a left side and/or a right side of the lie-flat area (153), wherein the at least one stopper (152) is preferably provided on its surface facing to the lie-flat area (153) with a buffer layer (154) made of an elastic material.

2. The truck of claim 1, wherein in the expanded position, the front edge (113) of the movable top cover (111) abuts against the supporting plate (150).

3. The truck of claim 1 or 2, wherein the windward side of the movable top cover (111) is formed into a streamlined arc structure.

4. The truck of any of claims 1-3, further comprising an actuating mechanism (160) for driving the movable cover plate (111) to move between the retracted position and the expanded position.

5. The truck of any of claims 1-4, wherein,
the interior of the driver cab (100) is divided into a seating area (120) for the passengers including a driver to seat and a living area (130) for arrangement of living facilities, and the living area (130) is located behind the seating area (120); and
the driver cab further (100) comprises at least one row of seats arranged in the seating area (120), and the at least one row of seats comprises a driver seat for the driver; and preferably, a single row of seats is arranged in the seating area (120);
wherein the living facilities arranged in the living area (130) preferably at least comprise: a toilet, a stove and a water sink; and optionally, the living facilities further comprise a refrigerator and a microwave oven, and the stove is an electromagnetic oven.

6. The truck of claim 5, wherein the driver cab (100) further comprises:
a divider plate (140) arranged between the seating area (120) and the living area (130) for separating the seating area (120) and the living area (130) of the driver cab (100) into two substantially independent spaces, wherein the divider plate (140) is preferably provided with a divider plate opening for enabling the passenger to pass through between the seating area (120) and the living area (130).

7. The truck of any of claims 5-6, further comprising a water storage tank for providing domestic water and/or a waste water tank for storing used waste water, which is arranged at the outside of the driver cab (100).

8. The truck of any of claims 5-7, wherein the driver cab (100) is provided with a plurality of vehicle doors on its side walls (102), the plurality of vehicle doors comprise:
at least one seating door (121) for accessing the seating area (120); and
a single living door (131) for accessing the living area (130);
wherein the driver cab (100) preferably further comprises:
a movable frame (132) arranged on an inner surface of the living door (131), the movable frame (132) being connected to the living door (131) so that the movable frame (132) is movable between a state of being vertical to the living door (131) and a state of being parallel to the living door (131).

9. The truck of any of claims 1-8, wherein the driver cab (100) further comprises an enclosure (170) arranged between the movable top cover (111) and the supporting plate (150) for enclosing the rest space (110) along the periphery of the rest space (110); and
optionally, the enclosure (170) is foldable or is made of a flexible material.

10. The truck of claim 9, wherein an enclosure opening (171) enabling the passenger to access the rest space (110) is formed in the enclosure (170), wherein
the enclosure opening (171) is preferably formed in a side of the enclosure (170) facing the cargo body (200); and
a ladder for the passenger to approach the enclosure opening (171) is arranged preferably on an outer surface of a back wall (101) of the driver cab (100).

11. The truck of any of claims 1-10, wherein the supporting plate (150) is provided with a supporting plate opening (151) for the passenger to access the rest space (110) from the interior of the driver cab (100).

12. The truck of any of claims 1-11, wherein the one or more stoppers (152) is movable between a non-stop position in which the stopper (152) is substantially lay flat to be close to the upper surface and a stop position in which the stopper (152) is substantially vertical to the upper surface.

13. The truck of any of claims 1-12, wherein the movable top cover (111) comprises:
a first piece (115), wherein when the movable top cover (111) is in the expanded position, the first piece (115) extends along the forward direction of the truck with a low front part and a high rear; and
a second piece (116) pivotably connected to the first piece (115), wherein when the movable top cover (111) is in the expanded position, the second piece (116) substantially extends horizontally.

14. The truck of any of claims 1-13, wherein,
when the movable top cover (111) is in the expanded position, the distance from the position of the highest point of the movable top cover (111) to the supporting plate (150) is not greater than 80cm.

15. The truck of any of claims 1-14, wherein the truck is a serial hybrid vehicle, the truck further comprises a power system, and the power system comprises:
a fuel source;
a control system;
at least two auxiliary power units, wherein each auxiliary power unit independently receives fuel from the fuel source under the control of the control system, converts the chemical energy in the fuel into electric energy and outputs the electric energy to a common current bus;
a power battery electrically connected to the common current bus to, under the control of the control system, receive the electric energy from the common current bus for charging or discharging through the common current bus; and
a traction motor electrically connected to the common current bus to, under the control of the control system, receive the electric energy from the common current bus, convert the electric energy into mechanical energy and transmit the mechanical energy to a power train of the truck so as to drive the truck to run.

## Patentansprüche

1. Lastkraftwagen, umfassend eine Fahrerkabine (100) zur Unterbringung von Fahrgästen und einen Frachtaufbau (200) zum Beladen mit Fracht, die voneinander getrennt sind, wobei die Fahrerkabine (100) umfasst:
eine Trägerplatte (150), die an der Oberseite der Fahrerkabine (100) angeordnet ist, um als obere Wand der Fahrerkabine (100) zu dienen; und
eine bewegliche obere Abdeckung (111) mit einer Vorderkante (113) und einer Hinterkante (114), die oberhalb der Trägerplatte (150) angeordnet ist und zwischen einer eingefahrenen Position und einer ausgefahrenen Position beweglich ist; wobei
in der eingefahrenen Position die Vorderkante (113) und die Hinterkante (114) der beweglichen oberen Abdeckung (111) an die Trägerplatte (150) angrenzend sind;
in der ausgefahrenen Position die Vorderkante (113) der beweglichen oberen Abdeckung (111) an die Trägerplatte (150) angrenzt und die Hinterkante (114) von der Trägerplatte (150) entfernt ist, so dass eine Luvseite der beweglichen oberen Abdeckung (111) zu einer geneigten Oberfläche mit einer niedrigen Vorderseite und einer hohen Rückseite entlang einer Vorwärtsrichtung des Lastkraftwagens gebildet ist, und
ein Ruheraum (110) für einen flach liegenden Fahrgast zwischen der beweglichen oberen Abdeckung (111) und der Trägerplatte (150) gebildet ist,
**dadurch gekennzeichnet, dass** die Fahrerkabine (100) weiterhin einen Anschlag oder mehrere Anschläge (152) umfasst, die an der Oberseite der Trägerplatte (150) um einen voreingestellten Liegeflächenbereich (153) im Ruheraum (110) angeordnet sind, wobei sich mindestens einer der einen oder mehreren Anschläge (152) entlang einer Querrichtung des Fahrzeugs erstreckt und auf einer linken Seite und/oder auf einer rechten Seite des Liegeflächenbereichs (153) angeordnet ist, wobei der mindestens eine Anschlag (152) vorzugsweise auf seiner dem Liegeflächenbereich (153) zugewandten Oberfläche mit einer Dämpferschicht (154) aus einem elastischen Material versehen ist.

2. Lastkraftwagen nach Anspruch 1, wobei in der ausgefahrenen Position die Vorderkante (113) der beweglichen oberen Abdeckung (111) an der Trägerplatte (150) anliegt.

3. LKW nach Anspruch 1 oder 2, wobei die Luvseite der beweglichen oberen Abdeckung (111) zu einer stromlinienförmigen Bogenstruktur ausgebildet ist.

4. LKW nach einem der Ansprüche 1-3, weiterhin umfassend einen Betätigungsmechanismus (160) zum Antreiben der beweglichen Abdeckplatte (111), um sich zwischen der eingefahrenen Position und der ausgefahrenen Position zu bewegen,

5. Lastkraftwagen nach einem der Ansprüche 1-4, wobei,
der Innenraum der Fahrerkabine (100) in einen Sitzbereich (120) für die Fahrgäste mit einem Fahrer-Sitz und in einen Wohnbereich (130) zur Anordnung von Wohneinrichtungen unterteilt ist und der Wohnbereich (130) hinter dem Sitzbereich (120) angeordnet ist; und
die Fahrerkabine weiterhin (100) mindestens eine Sitzreihe umfasst, die in dem Sitzbereich (120) angeordnet ist, und die mindestens eine Sitzreihe einen Fahrersitz für den Fahrer umfasst, und vorzugsweise eine einzelne Sitzreihe in dem Sitzbereich (120) angeordnet ist;
wobei die im Wohnbereich (130) angeordneten Wohneinrichtungen vorzugsweise mindestens umfassen: eine Toilette, einen Herd und eine Wasserspüle; und wobei die Wohneinrichtungen optional weiterhin einen Kühlschrank und eine Mikrowelle umfassen, und der Herd ein elektromagnetischer Ofen ist.

6. Lastkraftwagen nach Anspruch 5, worin die Fahrerkabine (100) weiterhin umfasst:
eine Trennwand (140), die zwischen dem Sitzbereich (120) und dem Wohnbereich (130) angeordnet ist, um den Sitzbereich (120) und den Wohnbereich (130) der Fahrerkabine (100) in zwei im Wesentlichen unabhängige Räume zu trennen, wobei die Trennwand (140) vorzugsweise mit einer Trennwandöffnung versehen ist, damit der Fahrgast zwischen dem Sitzbereich (120) und dem Wohnbereich (130) hindurchgehen kann.

7. Lastkraftwagen nach einem der Ansprüche 5-6, weiterhin umfassend einen Wasserspeichertank zum Bereitstellen von Brauchwasser und/oder einen Abwassertank zum Speichern von gebrauchtem Abwasser, der an der Außenseite der Fahrerkabine (100) angeordnet ist.

8. LKW nach einem der Ansprüche 5-7, wobei die Fahrerkabine (100) mit einer Mehrzahl von Fahrzeugtüren an ihren Seitenwänden (102) versehen ist, wobei die Mehrzahl von Fahrzeugtüren umfasst:
mindestens eine Fahrzeugsitztür (121) zum Zugang zum Sitzbereich (120); und
eine einzelne Wohnbereichstür (131) zum Zugang zum Wohnbereich (130);
wobei die Fahrerkabine (100) vorzugsweise weiterhin umfasst:
einen beweglichen Rahmen (132), der auf einer Innenfläche der Wohnbereichstür (131) angeordnet ist, wobei der bewegliche Rahmen (132) mit der Wohnbereichstür (131) verbunden ist, so dass der bewegliche Rahmen (132) zwischen einem Zustand, in dem dieser senkrecht zur Wohnbereichstür (131) ist, und einem Zustand, in dem dieser parallel zur Wohnbereichstür (131) ist, beweglich ist.

9. Lastkraftwagen nach einem der Ansprüche 1-8, wobei die Fahrerkabine (100) weiterhin ein Gehäuse (170) umfasst, das zwischen der beweglichen oberen Abdeckung (111) und der Trägerplatte (150) angeordnet ist, um den Ruheraum (110) entlang des Umfangs des Ruheraums (110) einzuschließen; und
das Gehäuse (170) optional faltbar oder aus einem flexiblen Material hergestellt ist.

10. Lastkraftwagen nach Anspruch 9, wobei in dem Gehäuse (170) eine Gehäuse-Öffnung (171) ausgebildet ist, die es dem Fahrgast ermöglicht, in den Ruheraum (110) einzutreten, wobei
die Gehäuseöffnung (171) vorzugsweise in einer dem Frachtaufbau (200) zugewandten Seite des Gehäuses (170) ausgebildet ist; und
eine Leiter, damit sich der Fahrgast der Gehäuseöffnung (171) nähert, vorzugsweise an einer Außenfläche einer Rückwand (101) der Fahrerkabine (100) angeordnet ist,

11. Lastkraftwagen nach einem der Ansprüche 1-10, wobei die Trägerplatte (150) mit einer Trägerplattenöffnung (151) versehen ist, damit der Fahrgast vom Inneren der Fahrerkabine (100) aus auf den Ruheraum (110) zugreifen kann.

12. Lastkraftwagen nach einem der Ansprüche 1-11, wobei der eine Anschlag oder die mehreren Anschläge (152) zwischen einer Nichtanschlags-Position, in der der Anschlag (152) im Wesentlichen flach liegt, um nahe der Oberseite angeordnet zu sein, und einer Anschlagsposition beweglich ist, in der der Anschlag (152) im Wesentlichen senkrecht zur Oberseite steht.

13. Lastkraftwagen nach einem der Ansprüche 1-12, wobei die bewegliche obere Abdeckung (111) umfasst:
ein erstes Teil (115), wobei sich das erste Teil (115) entlang der Vorwärtsrichtung des Lastkraftwagens mit einem niedrigen vorderen Abschnitt und einem hohen hinteren Abschnitt erstreckt, wenn sich die bewegliche obere Abdeckung (111) in der ausgefahrenen Position befindet; und
ein zweites Teil (116), das schwenkbar mit dem ersten Teil (115) verbunden ist, wobei sich das zweite Teil (116) im Wesentlichen horizontal erstreckt, wenn sich die bewegliche obere Abdeckung (111) in der ausgefahrenen Position befindet,

14. Lastkraftwagen nach einem der Ansprüche 1-13, wobei,
wenn sich die bewegliche obere Abdeckung (111) in der ausgefahrenen Position befindet, der Abstand von der Position des höchsten Punktes der beweglichen oberen Abdeckung (111) zur Trägerplatte (150) nicht größer als 80 cm ist.

15. Lastkraftwagen nach einem der Ansprüche 1-14, wobei der Lastkraftwagen ein serielles Hybridfahrzeug ist, wobei der Lastkraftwagen weiterhin ein Antriebssystem umfasst und das Antriebssystem umfasst:
eine Kraftstoffquelle;
ein Steuerungssystem;
mindestens zwei Hilfsstromeinheiten, wobei jede Hilfsstromeinheit unabhängig voneinander Kraftstoff von der Kraftstoffquelle unter der Steuerung des Steuerungssystems empfängt, die chemische Energie im Kraftstoff in elektrische Energie umwandelt und die elektrische Energie auf einen gemeinsamen Strombus abgibt;
eine Leistungsbatterie, die elektrisch mit dem gemeinsamen Strombus verbunden ist, um unter der Steuerung des Steuerungssystems die elektrische Energie vom gemeinsamen Strombus zum Laden oder Entladen über den gemeinsamen Strombus zu empfangen; und
einen Fahrmotor, der elektrisch mit dem gemeinsamen Strombus verbunden ist, um unter der Steuerung des Steuerungssystems die elektrische Energie vom gemeinsamen Strombus zu empfangen, die elektrische Energie in mechanische Energie umzuwandeln und die mechanische Energie an einen Antriebsstrang des Lastkraftwagens zu übertragen, um den Lastkraftwagen zum Fahren anzutreiben.

## Revendications

1. Camion, comprenant une cabine de conduite (100) pour héberger des passagers et une caisse à cargaison (200) pour charger une cargaison, qui sont séparées l'une de l'autre, la cabine de conduite (100) comprenant :
une plaque de support (150), disposée à la partie supérieure de la cabine de conduite (100) pour servir de paroi supérieure de la cabine de conduite (100) ; et
un capot supérieur mobile (111) ayant un bord avant (113) et un bord arrière (114), disposé au-dessus de la plaque de support (150) et mobile entre une position rétractée et une position étendue ;
dans la position rétractée, le bord avant (113) et le bord arrière (114) du capot supérieur mobile (111) étant adjacents à la plaque de support (150) ;
dans la position étendue, le bord avant (113) du capot supérieur mobile (111) étant adjacent à la plaque de support (150), et le bord arrière (114) étant à distance de la plaque de support (150), de telle sorte qu'un côté face au vent du capot supérieur mobile (111) est formé en une surface inclinée avec une partie avant basse et une partie arrière haute le long d'une direction vers l'avant du camion, et
un espace de repos (110) pour permettre à un passager de s'allonger étant formé entre le capot supérieur mobile (111) et la plaque de support (150),
**caractérisé par le fait que** la cabine de conduite (100) comprend en outre un ou plusieurs arrêts (152) disposés à la surface supérieure de la plaque de support (150) autour d'une zone à plat prédéfinie (153) dans l'espace de repos (110), au moins un parmi le ou les arrêts (152) s'étendant le long d'une direction latérale du camion et étant disposé sur un côté gauche et/ou un côté droit de la zone à plat (153), l'au moins un arrêt (152) comportant, de préférence, sur sa surface faisant face à la zone à plat (153), une couche tampon (154) faite d'un matériau élastique.

2. Camion selon la revendication 1, dans lequel, dans la position étendue, le bord avant (113) du capot supérieur mobile (111) est en butée contre la plaque de support (150),

3. Camion selon la revendication 1 ou 2, dans lequel le côté face au vent du capot supérieur mobile (111) est formé en une structure en arc aérodynamique.

4. Camion selon l'une quelconque des revendications 1 à 3, comprenant en outre un mécanisme d'actionnement (160) pour amener la plaque de capot mobile (111) à se déplacer entre la position rétractée et la position étendue.

5. Camion selon l'une quelconque des revendications 1 à 4, dans lequel
l'intérieur de la cabine de conduite (100) est divisé en une zone d'assise (120) pour permettre aux passagers, y compris un conducteur, de s'asseoir, et une zone d'habitation (130) pour la disposition de commodités d'habitation, et la zone d'habitation (130) est située derrière la zone d'assise (120) ; et
la cabine de conduite (100) comprend en outre au moins une rangée de sièges disposée dans la zone d'assise (120), et l'au moins une rangée de sièges comprend un siège conducteur pour le conducteur ; et, de préférence, une unique rangée de sièges est disposée dans la zone d'assise (120) ;
les commodités d'habitation disposées dans la zone d'habitation (130) comprennent, de préférence, au moins : des toilettes, un réchaud et un évier ; et, facultativement, les commodités d'habitation comprennent en outre un réfrigérateur et un four à micro-ondes, et le réchaud est un four électromagnétique.

6. Camion selon la revendication 5, dans lequel la cabine de conduite (100) comprend en outre :
une plaque de séparation (140) disposée entre la zone d'assise (120) et la zone d'habitation (130) pour séparer la zone d'assise (120) et la zone d'habitation (130) de la cabine de conduite (100) en deux espaces sensiblement indépendants, la plaque de séparation (140) comportant, de préférence, une ouverture de plaque de séparation pour permettre au passager de passer entre la zone d'assise (120) et la zone d'habitation (130).

7. Camion selon l'une quelconque des revendications 5 et 6, comprenant en outre un réservoir de stockage d'eau pour fournir de l'eau domestique et/ou un réservoir d'eaux usées pour stocker des eaux usées, qui est disposé à l'extérieur de la cabine de conduite (100).

8. Camion selon l'une quelconque des revendications 5 à 7, dans lequel la cabine de conduite (100) comporte une pluralité de portes de véhicule sur ses parois latérales (102), la pluralité de portes de véhicule comprenant :
au moins une porte d'assise (121) pour accéder à la zone d'assise (120) ; et
une unique porte d'habitation (131) pour accéder à la zone d'habitation (130) ;
la cabine de conduite (100) comprenant en outre, de préférence :
un cadre mobile (132) disposé sur une surface interne de la porte d'habitation (131), le cadre mobile (132) étant relié à la porte d'habitation (131) de telle sorte que le cadre mobile (132) est mobile entre un état perpendiculaire à la porte d'habitation (131) et un état parallèle à la porte d'habitation (131).

9. - Camion selon l'une quelconque des revendications 1 à 8, dans lequel la cabine de conduite (100) comprend en outre une enceinte (170) disposée entre le capot supérieur mobile (111) et la plaque de support (150) pour enfermer l'espace de repos (110) le long de la périphérie de l'espace de repos (110) ; et
facultativement, l'enceinte (170) est pliable ou est faite d'un matériau souple.

10. Camion selon la revendication 9, dans lequel une ouverture d'enceinte (171) permettant au passager d'accéder à l'espace de repos (110) est formée dans l'enceinte (170),
l'ouverture d'enceinte (171) étant, de préférence, formée dans un côté de l'enceinte (170) faisant face à la caisse à cargaison (200) ; et
une échelle pour permettre au passager de s'approcher de l'ouverture d'enceinte (171) étant, de préférence, disposée sur une surface externe d'une paroi arrière (101) de la cabine de conduite (100).

11. Camion selon l'une quelconque des revendications 1 à 10, dans lequel la plaque de support (150) comporte une ouverture de plaque de support (151) pour permettre au passager d'accéder à l'espace de repos (110) depuis l'intérieur de la cabine de conduite (100).

12. Camion selon l'une quelconque des revendications 1 à 11, dans lequel le ou les arrêts (152) sont mobiles entre une position de non-arrêt, dans laquelle l'arrêt (152) est sensiblement à plat pour être proche de la surface supérieure, et une position d'arrêt dans laquelle l'arrêt (152) est sensiblement perpendiculaire à la surface supérieure.

13. Camion selon l'une quelconque des revendications 1 à 12, dans lequel le capot supérieur mobile (111) comprend :
un premier élément (115), lorsque le capot supérieur mobile (111) est dans la position étendue le premier élément (115) s'étendant le long de la direction vers l'avant du camion avec une partie avant basse et une partie arrière haute ; et
un second élément (116) relié de manière pivotante au premier élément (115), lorsque le capot supérieur mobile (111) est dans la position étendue le second élément (116) s'étendant sensiblement horizontalement.

14. Camion selon l'une quelconque des revendications 1 à 13, dans lequel, lorsque le capot supérieur mobile (111) est dans la position étendue, la distance de la position du point le plus haut du capot supérieur mobile (111) à la plaque de support (150) n'est pas supérieure à 80 cm.

15. Camion selon l'une quelconque des revendications 1 à 14, le camion étant un véhicule hybride en série, le camion comprenant en outre un système d'alimentation, et le système d'alimentation comprenant :
une source de carburant ;
un système de commande ;
au moins deux unités d'alimentation auxiliaires, chaque unité d'alimentation auxiliaire recevant indépendamment du carburant à partir de la source de carburant sous le contrôle du système de commande, convertissant l'énergie chimique contenue dans le carburant en énergie électrique et délivrant en sortie l'énergie électrique à un bus commun de courant ;
une batterie d'alimentation reliée électriquement au bus commun de courant pour recevoir, sous le contrôle du système de commande, l'énergie électrique à partir du bus commun de courant pour réaliser une charge ou une décharge par l'intermédiaire du bus commun de courant ; et
un moteur de traction relié électriquement au bus commun de courant pour recevoir, sous le contrôle du système de commande, l'énergie électrique à partir du bus commun de courant, convertir l'énergie électrique en énergie mécanique et transmettre l'énergie mécanique à un groupe motopropulseur du camion de façon à amener le camion à fonctionner.
